# FASCICULE DE BREVET EUROPEEN

(11) **EP 0 376 802 B1**
(45) Date de publication et mention de la délivrance du brevet: **04.05.1994**
(21) Numéro de dépôt: 89403554.2
(22) Date de dépôt: 19.12.1989
(51) Int. Cl.: B62K 25/22, B62K 25/00, B62L 1/00

(54) **Dispositif correcteur de suspension particulièrement adapté à un motocycle**
Aufhängekorrektureinrichtung, insbesondere für ein Motorrad
Suspension-correcting device, in particular for a motor cycle

(30) Priorité: 27.12.1988 FR 8817222
(43) Date de publication de la demande: 04.07.1990
(73) Titulaire: ELF ANTAR FRANCE, 92400 Courbevoie (FR)
(72) Inventeur: Trema, Daniel, F-95870 Bezons (FR)
(74) Mandataire: Hirsch, Marc-Roger

(56) Documents cités:
- GB-A- 1 545 403
- GB-A- 2 052 407
- US-A- 3 989 261
- US-A- 4 533 153
- PATENT ABSTRACTS OF JAPAN vol. 6, no. 263 (M-181)(1141) 22 décembre 1982,
- & JP-A-57 155145 (SUZUZI JIDOSHA KOGYO K. K.) 25 septembre 1982,

## Description

La présente invention se rapporte à un dispositif de correction de la suspension avant d'un motocycle, dans lequel: au moins un bras-support d'arbre de roue est articulé sur un châssis et au moins un étrier de frein à disque, ou un organe équivalent tel qu'un flasque de support, coopère avec un disque de frein ou avec un organe équivalent, tel qu'un tambour de frein, solidaire de la roue avant montée à rotation sur le bras-support, des moyens de suspension reliant ledit bras-support au châssis, l'étrier de frein est monté sur le bras-support coaxialement à l'arbre de roue, en étant susceptible de tourner par rapport à ce bras support et est relié, par une biellette attachée à une articulation ménagée sur l'étrier, à une articulation haute ménagée sur l'avant du châssis du véhicule.

On connaît des dispositifs qui ont pour fonction d'éviter les réactions de suspension au cours du freinage, en particulier l'effet de salut, c'est-à-dire d'écrasement de la suspension avant.

GB-A-2 052 407 décrit par exemple un tel agencement dans lequel un organe de support des garnitures de frein avant d'un motocycle est monté sur un bras relié par une biellette à la partie supérieure de la fourche de roue avant, de manière à exercer vers le haut une force opposée à la surcharge qui s exerce sur l'avant du châssis du motocycle au cours du freinage et à réduire ainsi l'effet de salut.

Ces dispositifs dénommés "anti-salut" n'ont pas donné satisfaction aux conducteurs de motocycles, en particulier aux conducteurs de motocycles de course, lorsqu'ils ont été essayés en roulage sur des motocycles modifiés en conséquence. En effet, bien que la suspension avant de tels motocycles modifiés ait été rendue plus souple, les réactions de la suspension au freinage n'étaient plus transmises au conducteur qui manquait d'information à la fois sur l'effet du coup de frein initial et sur le développement de l'action de freinage. En fait, les dispositifs anti-salut essayés ont provoqué de nombreuses chutes inexpliquées, au cours des phases de freinage, par suite d'une perte de couplage homme-machine et n'ont pas amélioré la sécurité au freinage.

La présente invention a notamment pour objet de proposer un dispositif simple qui permette d'obtenir un effet anti-salut sur le freinage de la roue avant tout en constituant un élément d'amortissement des oscillations et vibrations de la direction du motocycle au cours du freinage et en transmettant au conducteur du motocycle des informations sur les situations de freinage dangereuses. Un tel dispositif permet en fait d'équiper le motocycle d'une suspension avant plus souple que celles utilisées jusque là, sans risquer des incidents et pertes de contrôle par mise en vibrations (dénommée aussi "mise en sonnette") de la direction du motocycle au cours du freinage.

Le dispositif correcteur selon l'invention est plus particulièrement, mais non exclusivement, destiné à équiper des motocycles comportant des suspensions du type Mac Pherson, dans lesquelles la fusée de roue est portée par un tube d'amortisseur relié par une articulation à une partie du cadre, ce dernier reposant directement sur un ressort hélicoïdal entourant le tube d'amortisseur et en appui sur un épaulement de ce dernier.

Dans le cas d'une roue avant de motocycle, une suspension du type Mac Pherson particulièrement adaptée est décrite dans les documents FR-A-2 594 781 et FR-A-2 601 641.

Cette suspension pour la roue avant comprend par exemple un bras-support portant à sa partie inférieure l'arbre de roue ou fusée et relié au châssis du motocycle par deux bras de suspension et de guidage haut et bas, un bloc de suspension et d'amortissement étant interposé et articulé entre l'extrémité supérieure du bras-support et un bec avant solidaire du châssis du motocycle.

Des moyens sont prévus pour permettre la rotation du bras-support autour de rotules terminant les bras de guidage haut et bas, sous l'action d'un guidon.

Pour le freinage, au moins un disque solidaire de la roue avant et de l'axe de support de celle-ci est disposé entre les deux garnitures de freinage d'un étrier de frein porté par le bras-support.

Selon l'invention, la biellette est une biellette longue dont les articulations d'extrémité constituent des articulations universelles à rotule présentant du frottement, de manière à constituer un élément d'amortissement des oscillations et vibrations de la direction du motocycle au cours du freinage de la roue avant du motocycle.

Selon un autre mode de réalisation de l'invention, l'articulation ménagée sur l'étrier est disposée sur un rayon déterminé par rapport à l'axe de l'arbre de roue avant, à une valeur telle que l'effort dirigé vers le haut et appliqué par l'étrier à la biellette au cours du freinage, soit sensiblement égal à l'effort de sens opposé exercé sur la partie avant du châssis du motocycle par le supplément de charge sur l'avant provoqué par la décélération du motocycle qui est due aux seules forces freinantes exercées sur la roue avant du motocycle, de manière que tout freinage significatif exercé sur la roue arrière du motocycle provoque un écrasement de la suspension avant signalant au conducteur qu'il utilise l'adhérence disponible sous la roue arrière et que le freinage ainsi exercé nécessite en conséquence une attention particulière.

Selon un autre mode de réalisation avantageux du dispositif selon l'invention, la biellette constitue un ensemble télescopique susceptible de se déformer axialement jusqu'à des butées de fin de course en présentant les propriétés d'un ressort et d'un amortisseur, de manière à améliorer l'effet d'amortissement réalisé par cette biellette au cours du freinage de la roue avant du motocycle.

D'autres caractéristiques et avantages de l'invention ressortiront mieux de la description suivante, donnée uniquement à titre d'exemple, en référence au dessin annexé dans lequel:
- la figure 1 est une vue schématique de la partie avant d'un motocycle équipé d'un correcteur de suspension selon l'invention;
- la figure 2 est une vue fragmentaire en coupe transversale, de la roue avant, avec son arbre de roue et son frein, du motocycle représenté partiellement à la figure 1.

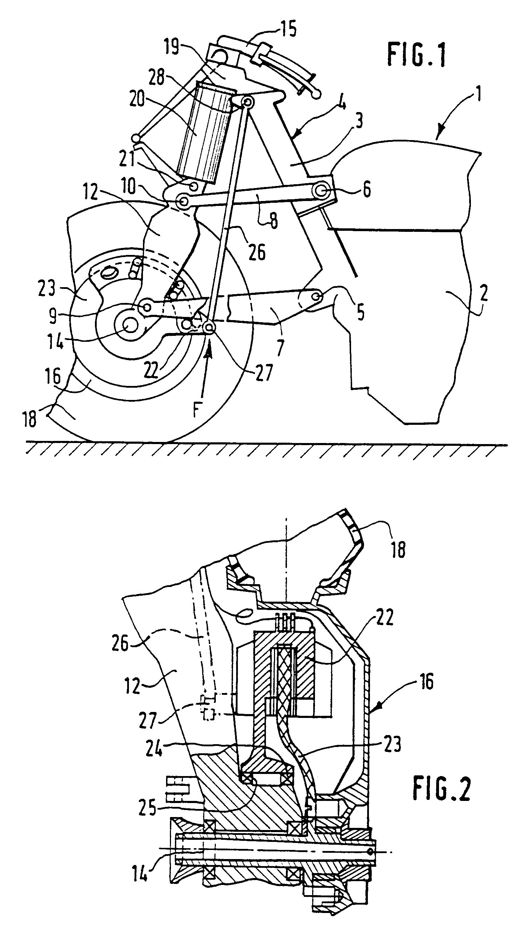

Dans le mode de mise en oeuvre choisi et représenté à la figure 1, le motocycle 1 comporte des moyens habituels qui seront seulement mentionnés: un bloc moteur 2 solidaire d'un châssis 3, ce dernier comprenant par exemple une poutre avant 4 sur laquelle sont articulés, par une de leurs extrémités, deux bras de guidage bas 7 et haut 8, respectivement à un bras-support unique 12 portant un arbre ou fusée de roue avant 14, sur lequel est montée à rotation par l'intermédiaire de paliers ou roulements la roue avant 16, avec son bandage pneumatique 18.

Le bras-support 12, relié à un guidon 15 par une timonerie appropriée, présente transversalement une forme arquée, entoure latéralement la roue 16 et son bandage pneumatique 18 et est aussi relié, par l'intermédiaire d'un bloc d'amortissement et de suspension 20, à un bec 19 avant du châssis 4 par l'intermédiaire d'un silent-bloc. Un axe de liaison 21 de ce bloc 20 au bras 12 permet des variations d'inclinaison du bras-support par rapport audit bloc.

De façon habituelle, le bras-support 3 porte au moins un étrier de frein à disque 22 traversé par un disque de frein 23 solidaire de la roue 16 et de l'arbre 14.

Selon l'invention, l'étrier de frein 22 est monté rotatif par l'intermédiaire de paliers ou roulements 24 sur une portée du bras-support 12, coaxiale à l'arbre 14 (figure 2), et une biellette rigide 26, articulée en 27 par une de ses extrémités à l'étrier 22, est articulée par son autre extrémité, en 28, à la partie supérieure ou bec 19 de la poutre avant 4 du châssis 3. Cette biellette renvoie sur le châssis 3 des forces de réaction qui prennent naissance au freinage.

Dans les exemples décrits, la biellette de liaison 26 est rigide. Il est possible de remplacer cette liaison rigide par un ensemble télescopique susceptible de se déformer axialement jusqu'à des butées de fin de course et combinant un ressort externe et un amortisseur interne.

Le fonctionnement du dispositif qui vient d'être décrit va maintenant être examiné. Si l'on se reporte à la figure 1, on voit qu'au cours du roulage normal non freiné du motocycle 1, la suspension se débat sur les ondulations du chemin de roulement en écrasant plus ou moins le ressort du bloc de suspension 20. La distance entre l'axe d'articulation 28 de la biellette 26 sur le châssis 3 et l'étrier de frein 22 va donc varier. La longueur de la biellette 26 étant constante, les débattements du bec 19 de la poutre avant 4 du châssis 3 vont provoquer chaque fois une rotation de l'étrier de frein 22 autour de la fusée de roue avant 14.

Si le conducteur du motocycle exerce une action de freinage, l'étrier de frein 22 qui frotte par ses garnitures de friction (non représentées) sur le disque 23, reçoit de ce dernier une force de friction F tangentielle qui se transmet (amplifiée ou réduite en fonction inverse du rayon de l'articulation 27 par rapport à l'axe de la fusée de roue 14), à la biellette 26, et de là, au bec 19 de la poutre 4 du châssis du motocycle, alors surchargé par le transfert de charge sur l'avant provoqué par la décélération du motocycle. Afin de bénéficier d'une suspension stable, on peut positionner l'articulation 27 sur un rayon tel, par rapport à l'axe de la fusée 14, que l'effort dirigé vers le haut de la biellette 26 au cours du freinage, soit légèrement inférieur ou égal à l'effort provoqué en 28 par le transfert de charge sur l'avant dû à la décélération du motocycle. La décélération du motocycle n'est d'ailleurs pas toujours proportionnelle à la force freinante tangentielle exercée en réaction à la force F car elle dépend également de la force freinante exercée sur la roue arrière du motocycle. En fait, selon la disposition représentée sur les figures 1 et 2, la biellette 26 produit le même effet, au cours du freinage, qu'un durcissement temporaire de la suspension qui, bien que des surcharges importantes s'exercent sur l'essieu avant, ne subit alors pas d'écrasement supplémentaire au cours du freinage.

Il est possible de compenser, par la force F qui s'exerce à l'avant du motocycle, uniquement le supplément de charge sur l'avant provoqué par la décélération du motocycle complet (avec conducteur et passager(s) éventuels) qui est due aux seules forces freinantes exercées sur la roue avant du motocycle. Toute action sur le frein arrière produit alors un écrasement de la suspension avant qui signale au conducteur du motocycle qu'il utilise l'adhérence disponible sous la roue arrière et que son freinage risque, en conséquence, de provoquer une perte d'adhérence à l'arrière et d'être dangereux. Le réglage le plus courant de l'équilibrage de la seule action de freinage avant consiste à équilibrer le transfert de charge sur l'avant provoqué par le frein avant agissant sur le motocycle en charge normale, c'est-à-dire avec le seul conducteur, pour le coefficient de friction habituel moyen (c'est-à-dire avec des garnitures légèrement chaudes) des garnitures de frein avant. La longue biellette 26 constitue par ailleurs un élément d'amortissement supplémentaire des oscillations et vibrations de la direction du motocycle au cours du freinage, du fait du frottement à ses extrémités d'articulation pour lesquelles on doit comprendre qu'il s'agit d'articulations universelles c'est-à-dire à rotule.

Dans le cas non représenté où la biellette 26 est remplacée par un ensemble "ressort-amortisseur" précontraint en effort et susceptible de venir en butée de chaque côté à partir d'un point moyen et après une course d'écrasement de ressort et d'amortissement, les réactions du couple de freinage sur la suspension sont plus réduites et ne se transmettent complètement qu'après un délai d'amortissement. Tout se passe alors comme si le conducteur était tout d'abord prévenu de l'écrasement de sa suspension avant au cours du freinage et puis voyait ensuite, sous l'effet de la venue de la biellette de transmission en butée de fin de course axiale, la suspension se stabiliser, exempte d'écrasements ou extensions supplémentaires dus à l'effet de "salut". Selon une autre conséquence avantageuse du mode de mise en oeuvre des équipements de freinage selon la présente invention, il est possible, grâce au montage rotatif des étriers de frein, de disposer ceux-ci, par rapport à la roue ou bien par rapport au bras de support unique avant 12, dans des emplacements où il était auparavant impossible de loger et de maintenir en position ces étriers de frein.

Le dispositif selon l'invention a été décrit en relation avec un étrier de frein chevauchant un disque de frein mais il est bien évident que l'on peut l'appliquer à d'autres types de frein que le frein à disque, notamment aux freins à tambour où le rôle de l'étrier de frein qui reçoit l'effort de réaction à la friction sur le disque est rempli par le flasque de support des cylindres de frein et des segments portant les garnitures de freinage, ce flasque étant alors monté à rotation par rapport au bras-support et relié par une biellette au châssis du motocycle.

## Revendications

1. Dispositif de correction de la suspension avant d'un motocycle dans lequel: au moins un bras-support (12) d'arbre de roue (14) est articulé sur un châssis (3) et au moins un étrier de frein à disque (22) ou un organe équivalent tel qu'un flasque de support coopère avec un disque de frein (23) ou avec un organe équivalent, tel qu'un tambour de frein, solidaire de la roue avant (16) montée à rotation sur le bras-support (12), des moyens de suspension (20) relient ledit bras-support au châssis (3), l'étrier de frein (22) est monté sur le bras-support coaxialement à l'arbre de roue, en étant susceptible de tourner par rapport à ce bras support et est relié, par une biellette (26) attachée à une articulation (27) ménagée sur l'étrier (22) à une articulation haute (28) ménagée sur l'avant du châssis (3) du véhicule, caractérisé en ce que la biellette est une biellette (26) longue dont les articulations d'extrémité (27, 28) constituent des articulations universelles à rotule présentant du frottement, de manière à constituer un élément d'amortissement des oscillations et vibrations de la direction du motocycle au cours du freinage de la roue avant du motocycle.

2. Dispositif de correction selon la revendication 1, caractérisé en ce que l'articulation (27) ménagée sur l'étrier (22) est disposée sur un rayon déterminé par rapport à l'axe de l'arbre de roue avant (14), à une valeur telle que l'effort dirigé vers le haut et appliqué par l'étrier (22) à la biellette (26) au cours du freinage, soit sensiblement égal à l'effort de sens opposé exercé sur la partie avant (19) du châssis (3) du motocycle par le supplément de charge sur l'avant provoqué par la décélération du motocycle qui est due aux seules forces freinantes exercées sur la roue avant du motocycle, de manière que tout freinage significatif exercé sur la roue arrière du motocycle provoque un écrasement de la suspension avant signalant au conducteur qu'il utilise l'adhérence disponible sous la roue arrière et que le freinage ainsi exercé nécessite en conséquence une attention particulière.

3. Dispositif de correction selon la revendication 1, caractérisé en ce que la biellette (26) constitue un ensemble télescopique susceptible de se déformer axialement jusqu'à des butées de fin de course en présentant les propriétés d'un ressort et d'un amortisseur, de manière à améliorer l'effet d'amortissement réalisé par cette biellette au cours du freinage de la roue avant du motocycle.

## Claims

1. Front suspension-correcting device for a motorcycle, in which: a wheel-axle (14) supporting arm (12) is pivotally connected on a chassis (3) and at least one disk-brake caliper (22) or an equivalent member, such as a brake flange, cooperating respectively with a brake disk (23) or an equivalent member, such as a brake drum, rigidly fixed to the front wheel (16) mounted rotatably on the support arm (12), suspension means (20) connecting the said support arm to the chassis (3), the brake caliper (22) being mounted on the supporting arm coaxially relative to the axle, while being capable of rotating relative to this supporting arm and being linked via a connecting rod (26) fastened to a pivoting joint (27) provided on the caliper (22) to an upper pivoting joint (28) provided on the upper portion of the vehicle chassis (3), characterized in that the connecting rod is a long connecting rod (26) the end pivoting joints (27, 28) of which constitute universal ball-and-socket type joints exhibiting a degree of friction thereby constitung an oscillation and vibration damping element for the steering of said motorcycle during braking of the front wheel thereof.

2. Correction device according to claim 1, characterized in that the pivoting connection (27) provided on the brake caliper (22) is disposed on a determined radius relative to the front wheel axle (14) of a value such that the force directed upwards and applied by the caliper (22) to the connecting rod (26) during braking is substantially equal to the force in the opposite direction produced on the forward portion (19) of said chassis (3) of the motorcycle by the supplemental load on the forward portion caused by deceleration of said motorcycle due to braking forces applied solely to the front wheel of the motorcycle, whereby any significant braking exercised on the rear wheel of said motorcycle leads to a crushing effect on the front suspension indicating to the driver that he is using the available adhesion under the rear wheel and should take particular care with the braking thus exercised.

3. Correction device according to claim 1, characterized in that the connecting rod (26) forms a telescopic assembly capable of being deformed axially as far as limit stops and having the properties of a spring and of a shock-absorber, whereby the shock-absorbing effect of said connecting rod during front wheel braking of said motorcycle is improved.

## Patentansprüche

1. Vorrichtung zur Korrektur der Vorderradaufhängung eines Motorrads, bei der mindestens ein Stützarm (12) der Radachse (14) an einem Rahmen (3) gelenkig gelagert ist und mindestens ein Scheibenbremssattel (22) oder ein gleichwertiges Funktionsteil, wie z.B. ein Bremszylinder-Stützflansch, mit einer Bremsscheibe (23) oder einem gleichwertigen Funktionsteil, wie z.B. einer Bremstrommel, Zusammenarbeitet, die mit dem auf dem Stützarm (12) drehbar gelagerten Vorderrad (16) fest verbunden ist, wobei Federungsmittel (20) den besagten Stutzarm (12) mit dem Rahmen (3) verbinden, und wobei der Bremssattel (22) koaxial zur Radachse (14) auf dem Stützarm (12) angebracht ist, wobei der Bremssattel (22) sich in Bezug auf den Stützarm (12) drehen kann und durch eine an einem an ihm angebrachten Gelenk (27) befestigte Stange (26) mit einem am Vorderteil des Rahmens (3) oben angebrachten Gelenk (28) verbunden ist,
dadurch gekennzeichnet,
daß es sich bei der Stange (26) um eine lange Stange handelt, deren Endgelenke (27, 28) Universalgelenke bilden, die eine Reibung aufweisen, so daß sie eine Dämpfung der Schwingungen und Vibrationen der Motorradlenkung während des Bremsvorganges des Vorderrads des Motorrads bilden.

2. Vorrichtung nach Anspruch 1, dadurch gekennzeichnet, daß das an dem Bremssattel (22) angebrachte Gelenk (27) auf einem in Bezug auf die Vorderradachse (14) bestimmten Abstand angeordnet wird, und zwar mit einem solchen Wert, daß die nach oben gerichtete und beim Bremsvorgang vom Sattel (22) auf die Stange (26) ausgeübte Kraft der in entgegengesetzter Richtung durch die von der allein durch die auf das Vorderrad ausgeübten Bremskräfte ausgelöste Verzögerung verursachte Überbelastung des vorderen Teils (19) des Motorradrahmens (3) ausgeübten Kraft weitgehend entspricht, so daß jeder bedeutende, auf das Hinterrad des Motorrads ausgeübte Bremsvorgang ein Zusammendrücken der vorderen Federung verursacht, welches dem Fahrer signalisiert, daß er das am Hinterrad verfügbare Haftvermögen benutzt und daß der durchgeführte Bremsvorgang also eine besondere Aufmerksamkeit erfordert.

3. Vorrichtung nach Anspruch 1, dadurch gekennzeichnet, daß die Stange (26) eine teleskopische Einheit bildet, die sich axial bis zu Endanschlägen in ihrer Länge verändern kann und die Eigenschaften einer Feder und eines Stoßdämpfers aufweist, so daß die mit dieser Stange (26) erreichte Dämpfungswirkung während des Bremsvorganges des Motorradvorderrads verbessert wird.
